# EUROPEAN PATENT SPECIFICATION

(11) **EP 2 174 616 B1**
(45) Date of publication and mention of the grant of the patent: **14.11.2018**
(21) Application number: 08791879.3
(22) Date of filing: 30.07.2008
(51) Int. Cl.: A61C 3/02, A61C 3/06, B23C 5/10

(54) **STAINLESS STEEL BUR**
EDELSTAHLBOHRER
FRAISE EN ACIER INOXYDABLE

(30) Priority: 01.08.2007 JP 2007200547; 01.08.2007 JP 2007200548; 30.08.2007 JP 2007224115
(43) Date of publication of application: 14.04.2010
(73) Proprietor: MANI, INC., Utsunomiya-shi, Tochigi 321-3231 (JP)
(72) Inventor: MATSUTANI, Kanji, Utsunomiya-shi Tochigi 321-3231 (JP); TAKASE, Toshiyuki, Utsunomiya-shi Tochigi 321-3231 (JP); KANEKO, Norio, Utsunomiya-shi Tochigi 321-3231 (JP); SHIOIRI, Mutsunori, Utsunomiya-shi Tochigi 321-3231 (JP)
(74) Representative: Isarpatent
(86) International application number: PCT/JP2008/063648
(87) International publication number: WO 2009/017148

(56) References cited:
- EP-A2- 0 726 065
- WO-A1-00/41644
- JP-A- H08 206 133
- JP-A- 2001 187 068
- JP-A- 2002 532 133
- JP-A- 2004 016 400
- JP-A- 2004 525 685
- JP-A- 2005 211 094
- US-A- 2 845 709
- US-A- 5 735 690
- US-B2- 6 676 410

## Description

### Technical Field

The present invention relates to a stainless steel bur used for cutting dental caries of a tooth in treatment of a cavity.

### Background Art

A healthy tooth has the surface covered by enamel, dentin is therebelow, and dental pulp is inside of the dentin. A tooth root is integrally formed in the dentin.

While a cavity generates through development of cavity causing bacteria, the cavity causing bacteria normally adheres to depressions in the enamel surface and begins to eat at the enamel. If the enamel continues to be eaten away, the dental caries reaches the dentin and becomes soft. Moreover, if it is untreated, the dental caries reaches the dental pulp.

For example, when the dental caries stops at the dentin, treatment of the cavity is carried out by removing the dental caries from the tooth and filling a dental filling into the formed hole.

The cutting tool used to remove the dental caries is made to differ for the enamel target portion from for the dentin target portion.

Enamel has a hardness of Hv 270 to 300, which is very hard, and is thus cut using a dental bur. The dental bur is attached to a rotating apparatus such as a hand piece, and a diamond bur, a tungsten carbide bur, and the like are available.

Since even hard enamel portions may be easily removed with such dental bur, it may be even easier to cut the dentin therebelow. However, if the dental caries of the dentin is cut by a dental bur, since cutting is easy, too much is cut even to the peripheral area aside from the dental caries, leading to greater damage to the tooth.

Therefore, conventionally, only the enamel dental caries is cut with the dental bur, and if the dentin is reached, cutting is then carried out using a steel bur. The steel bur has a lower hardness than the dental bur and may thus prevent cutting deep into healthy dentin portions.

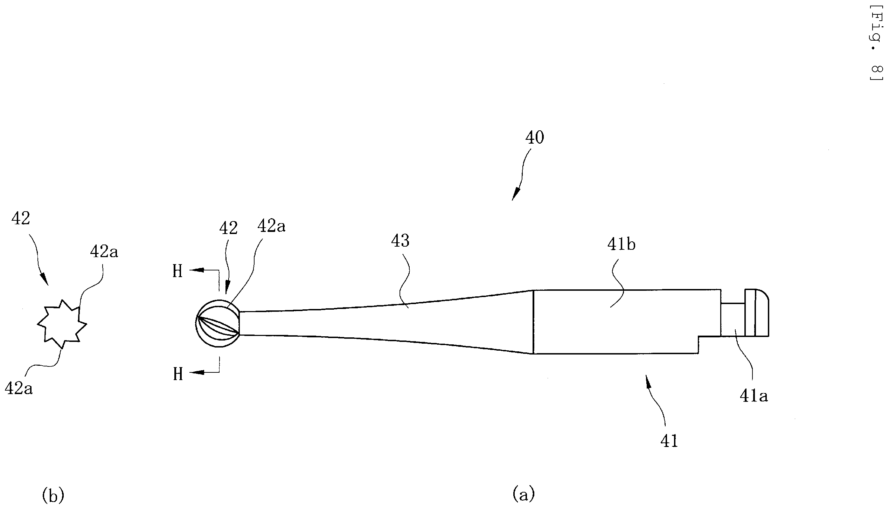

FIG. 8 is a diagram of a conventional steel bur, where (a) is a front view and (b) is a cross section cut along the line H-H of (a).

The conventional steel bur 40 of FIG. 8 includes a base side handle 41, a tip working section 42, multiple cutting blades 42a formed in the working section 42, and a tapered intermediate section 43 between the working section 42 and the handle 41.

The handle 41 includes an attachment 41a connected to a hand piece, and a straight part 41b for a rotating apparatus to grip. The attachment 41a has an irregular shape in order to provide a locking feature. The steel bur 40 is made of carbon steel, and hardness exceeds Hv 800 through heat treatment. Meanwhile, dental caries of dentin has a hardness of approximately 20 Hv, and healthy dentin has a hardness of 50 to 60 Hv. While cutting dental caries of dentin using a steel bur having the above-given hardness is easy, even if a healthy dentin portion is cut, the feeling is not much different from cutting the dental caries, and thus there is a problem of possibly cutting deep into the healthy dentin. Cutting deep into healthy dentin must be avoided since it leads to deterioration of dentin. Moreover, there is a problem that it may penetrate through the dentin to the dental pulp without the technician's knowledge, thereby increasing damage to the tooth, and inflicting sharp pain to the patient.

Concerning such problems, Patent Document 1 (Japanese Patent Application Publication No. 2002-532133) proposes use of a cutting tool with a lower hardness than that of healthy dentin not having a cavity. In other words, a cutting tool with hardness between that (approximately Hv 20) of dental caries of dentin and that (Hv 50 to 60) of healthy dentin is used. If the cutting tool cuts the dental caries and reaches healthy dentin, cutting blades of the cutting tool are worn away and can no longer cut. Therefore, there is no concern of cutting healthy dentin.
Patent Document 1: Japanese Patent Application Publication No. 2002-532133

EP 0 726 065 A2 discloses a rotary drilling instrument for dental treatments to be coupled to a rotary tool when used, comprising a body made of an austenitic stainless steel having a fibriform organization elongated in a longitudinal direction of the body so that the surface of the body has a predetermined hardness, a cutting section formed on one end of the body having a spiral or straight blade, a shank formed on the other end of the body and adapted to coupled to the rotary tool, and a neck portion formed on the body between the cutting section and the shank.

WO 00/41644 A1 discloses a dental tool with a shaft which can be mounted in a drive means and a head which is integral with the shaft across a neck area, said head being provided with abrasive particles. The dental tool is produced from austenitic steel and has a tensile strength of the austenitic steel in the range of 2000 to 3000 N/mm².

JP 2001 187068 A discloses a root canal treating apparatus for dentistry having a shaft part and an operation part composed of helical cutting blades and continued to the shaft part and the shape of the cross section in a position (a root part) on the side of the shaft part of the operation part is a parallelogram including rectangle. The long side /the short side is larger than the long side /the short side of a parallelogram including rectangle of the cross section at a position on the side of the extremity, and the twisted angle at the root part is larger than the twisted angle at the extremity.

US 5,735,690 discloses a dental bur having various short-diameter sections at the distal end of a straight part of a bur-handle.

### DISCLOSURE OF INVENTION

### [Problems to be Solved by the Invention]

However, while this works if the boundary between dental caries and healthy dentin is a smooth surface, if there are minute depressions, the cutting tool disclosed in Patent Document 1 cannot completely remove dental caries within the minute irregularities. Incomplete removal of the dental caries is a source of infection, greatly contributing to incomplete treatment.

The present invention is devised through consideration of these actual conditions. An objective thereof is to provide a stainless steel bur that is capable of cutting minute irregularities and even healthy dentin if needed, and when cutting the healthy dentin, is capable of letting the technician detect it, reducing cutting force toward the dental pulp therebelow, and reducing possibility of cutting to the dental pulp by accident.

### [Means of Solving the Problems]

A stainless steel bur according to the present invention is defined by the appended independent claim. Preferred embodiments of the invention are defined in the dependent claims.

A short diameter section and/or a hole is formed in the handle within a range of one-third of the length of the handle from an intermediate section side end of the handle, the intermediate section including the part having the tapered form

A short diameter section may be formed in the tapered part. While the short diameter section is preferably one (U-shaped groove or the like) that does not have a dent corner, it may also be a V-shaped groove. Moreover, number of short diameter sections is not limited to one, and a plurality thereof may be formed.

A structure in which the diameter (shortest diameter) of the narrowest portion between the working section and the handle is smaller than the diameter (maximum diameter) of the widest portion of the working section, and in which the length between the working section and the handle is at least the maximum diameter of the working section may be used.

Further alternatively, a cutting blade at the tip of the working section may be blunted to make a blunt edge.

A structure in which a cutting blade at the tip of the working section is blunted through etching, barrel polishing or buffing by independently or in a combination thereof, the cutting blade of the working section is made bluntest at the tip of the working section, gradually becoming sharper as it draws away from the tip, and has a normal bluntness past the longest diameter position.

### [Results of Invention]

While the stainless steel bur of the present invention is made of austenitic stainless steel, sufficient hardness and strength are provided for cutting dentin since it is made into a fibrous structure through wire drawing and hardened. Dental caries of the dentin is soft and can thus be cut without any problem. Since stainless steel bends easier than normal carbon steel, if cutting moves from dental caries to hard healthy dentin or enamel, the stainless steel bur bends and resulting vibrations generate to the rotating stainless steel bur, thereby increasing cutting resistance due to a blunt rake angle. Depending on cutting location, there may be little bending and vibration but cutting resistance may be great. Cutting healthy dentin is possible even if there is increase in vibration and/or cutting resistance, and the technician may be aware that healthy dentin is being cut by detecting the increase in vibration and/or cutting resistance. Excessive cutting may be prevented by paying attention to cutting location. Even if there are irregularities in the dental caries as such, smooth cutting is possible and the dental caries may be completely removed.

Furthermore, according to the stainless steel bur of the present invention , if cutting moves from dental caries to hard healthy dentin or enamel, it may be known to the technician that healthy dentin is being cut since the short diameter section has bent at one-third of the intermediate section side and/or in an intermediate section of the handle, and resulting vibrations have generated to the rotating stainless steel bur.

Note that conventionally, other dental burs (peeso reamer, gates drill, and the like) have had short diameter sections formed in 1 to 6 places on the handle for distinction of product size (refer to FIG. 1 of Japanese Patent No. 3375771). However, since they have appropriate mechanical qualities (rigid and difficult to break) as burs to cut root canal orifice, formation of short diameter sections is limited between the center of the handle and the base side (attachment side to the hand piece), forming a short diameter section within one-third of the intermediate section side of the handle or portion of the intermediate section and similar sections that is narrow and easy to bend has not been envisioned.

An aim of the present invention is to provide a steel bur that has a short diameter section and/or a hole formed for a different purpose than that of the conventional technology, and since the technician may detect that the bur bends (since a short diameter section has been formed) when healthy dentin has been cut, may completely remove dental caries of dentin and not cut healthy dentin more than necessary.

Since the cutting blades at the tip of the working section of the stainless steel bur may be blunted, digging force at the tip is small, and drilling force is weak when used downward.

Since the dental caries of the dentin has a low hardness, it may be cut while drilling down without any trouble even with blunt cutting blades. However, if the dental caries reaches healthy dentin, the technician can know that he/she is cutting the healthy dentin since the cutting force decreases significantly. In addition, cutting speed drops even with healthy dentin, but cutting is possible. Even if the dental caries has irregularities, cutting peripheral healthy dentin, completely cutting out the dental caries, and completing cutting at a suitable point is possible, and reducing the possibility of reaching dental pulp is possible. Meanwhile, by providing the cutting blades having normal bluntness at a part (on the handle side) past the widest diameter of the working section and keeping sharpness of the entirety of the cutting blades of the working section, the cutting blades may be prevented from wearing out quickly due to enamel very likely touching that part, and that part may be able to cut a little of the enamel itself.

### BEST MODE FOR CARRYING OUT THE INVENTION

Embodiments of the present invention are described forthwith with reference to attached drawings.

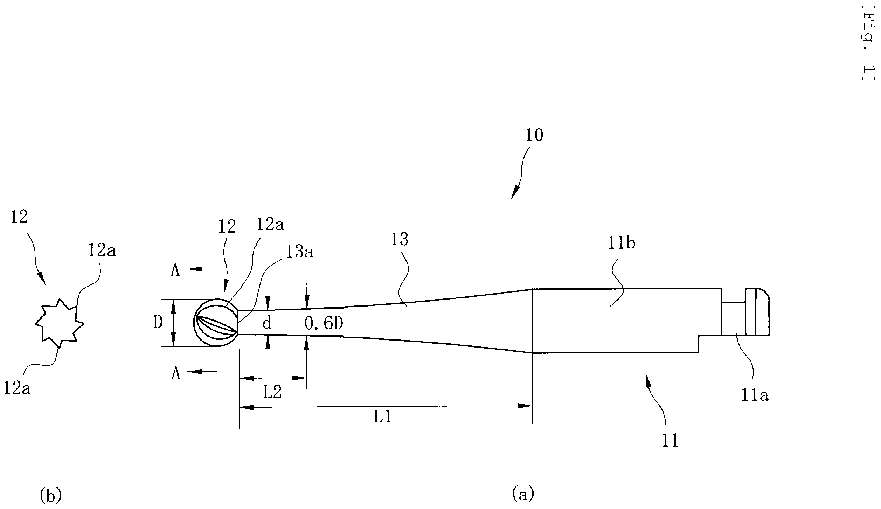

FIG. 1 is a diagram of an example of a conventional stainless steel bur, where (a) is a front view and (b) is a cross section cut along the line A-A of (a). Compared to the conventional example, the tapered portion is slightly different but it is otherwise the same.

The stainless steel bur according to the present invention is made of austenitic stainless steel. An austenitic stainless steel wire rod is subjected to a cold wiredrawing process one or more times into a desired thickness. In an austenitic stainless steel composition, improvement in flexural strength and exhibition of uniform strength without any fluctuation across the entire length is possible by pulling crystal grains in the axial direction into fibers through wire drawing. Such material has a concentric hardness distribution. In other words, hardness near the surface is highest, and gradually decreases toward the center. While there is a reduction of area according to which it becomes hardest through wire drawing, making this the limit, material with a desired hardness may be obtained by appropriately selecting reduction of area and number of times of repeating wire drawing. Moreover, in the case of wire drawing exceeding the limit that makes it hardest, an annealing step may be provided between each time of wire drawing so that the fiber structure becomes similar to the original granular structure. Since the stainless steel bur according to the present invention made of austenitic stainless steel as such is hardened through work hardening, thereby providing the cutting edge with a uniform hardness but softer than the conventional steel bur, and portion between working section and handle can bend easier, it has a characteristic of making difference in sensation when cutting healthy dentin stand out. Meanwhile, the conventional steel bur easily becomes harder at the cutting blade edges since it is hardened through quenching, and it is difficult to recognize difference in sensation even if cutting healthy dentin.

Cut this material to a predetermined length, form a working section in a spherical shape or the like, a handle attached to a hand piece, and a tapered intermediate section therebetween, and form cutting blades in the spherical working section, thereby completing the stainless steel bur.

Note that while the stainless steel bur is completed and usable through the above, thereafter, the surface of the cutting blade edges may be made slightly harder than the inside through tempering, and further thereafter, burrs may be made through etching to slightly take the edge off of the cutting blade edges.

A stainless steel bur 10 of FIG. 1 includes a base side handle 11, a tip working section 12, multiple cutting blades 12a formed in the working section 12, and a tapered intermediate section 13 between the working section 12 and the handle 11.

The handle 11 includes an attachment 11a connectable to a hand piece, and a straight part 11b for a rotating apparatus to grip. The attachment 11a has an irregular shape in order to provide a locking feature.

The working section 12 is spherical and has multiple arc cutting blades 12a formed circumferentially. The hardness of these cutting blades 12a in the embodiments of the present invention is approximately Hv 600 to 700. This hardness allows cutting of dentin, of course, as well as enamel. However, the rake angle of each of the cutting blades 12a may be consciously blunted so that they cannot cut enamel. Setting of appropriate values to rake angles (angle formed by the line joining the center of rotation to cutting blade and cutting face), and lead angles of the cutting blades 12a allows control of balance in ease of detection and cutting performance when reaching healthy dentin. By setting the rake angles within a range of 0 to minus 30 degrees and the lead angles within a range of 10 to 30 degrees, a technician may easily detect that healthy dentin has been reached since favorable cutting performance is exhibited, it vibrates easily when healthy dentin has been reached, and cutting resistance increases. If the rake angles are greater than zero or the lead angles are greater than 30 degrees (increase in the positive direction), the cut is too clean and thus tends to make it difficult to detect that it has reached the healthy dentin. Moreover, if the rake angles are less than minus 30 degrees or the lead angles are less than 10 degrees (increase in the negative direction), cutting resistance and vibrations become too great and thus cutting performance tends to decline. Note that while the relief angle should be sufficiently large for easy discharging, if the relief angle is increased when the rake angle has been sharpened (increased in the positive direction), the point angle of each cutting blade becomes smaller, influencing durability. Therefore, it is favorable to make the rake angles blunt (increase in the negative direction) in consideration of durability. By setting the rake angles and the lead angles appropriately in this manner, balance of the aforementioned contradictory performances may be achieved.

While an intermediate section 13 of the bur in FIG. 1 is tapered, the shortest diameter d of a connecting part 13a to the working section 12 is set to 40 to 60% of maximum diameter D of the working section 12. Moreover, length L1 of the intermediate section 13 needs to be at least the same as the maximum diameter D of the working section 12. Favorably, length L2 from the working section 12 to the position along the length of the intermediate section 13 having 60% of diameter D of the working section 12 is 1.0 D to 10.0 D where D denotes the maximum diameter of the working section 12. This is because if it is less than 1.0, strength of the intermediate section 13 is too strong so that vibration when healthy dentin has been cut is small, which makes it difficult to detect. If it exceeds 10.0 D, strength of the stainless steel bur 10 weakens, and it vibrates even while cutting dental caries. Note that it may be straight partway along the intermediate section 13 toward the working section 12, as long as at least a part of the intermediate section 13 is tapered.

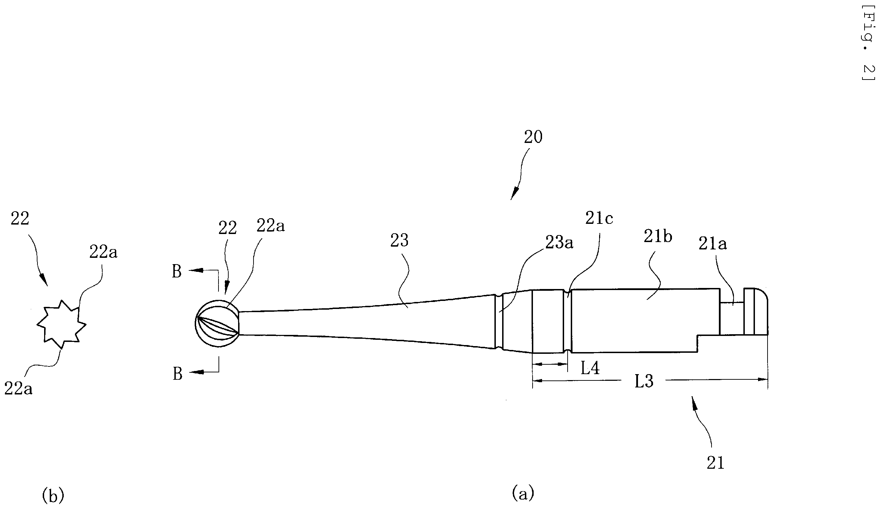

FIG. 2 is a diagram of an embodiment of the stainless steel bur according to the present invention, where (a) is a front view and (b) is a cross section cut along the line B-B of (a). Aside from having a short diameter section 23a, it is otherwise externally the same as that in the conventional example.

While an intermediate section 23 of the embodiment in FIG. 2 is tapered, a short diameter section 23a is formed near the connecting part with a handle 21 or thickest section, and a short diameter section 21c is formed in the handle 21. The position of the short diameter section 21c formed in the handle 21 is within a range established by the relationship L4 < L3/3 where L3 denotes length of the handle 21 and L4 denotes length from the intermediate section 23 side end of the handle 21 to the short diameter section 21c. In other words, the short diameter section 21c is provided at one-third of the length of the handle 21 on the intermediate section 23 side. In the embodiment of FIG. 2, while both of the short diameter sections 23a and 21c are U-shaped grooves, they are not limited to this form. Shape, width, and depth of the grooves are not particularly limited, and the bottoms may be axially lengthened like the bottom of a pan or they may be V-shaped. Structure with U-shaped grooves without concave sharp corners makes it difficult to break because it prevents stress accumulation. Moreover, in this embodiment, while the number of the short diameter sections 23a and 21c is two, just one or the other may used, or three or more may be used. The position of the short diameter section 23a is also not particularly limited; however, in order to make it easy to bend yet difficult to break, it is favorable to be formed between the center of the intermediate section 23 and the connecting part to the handle 21.

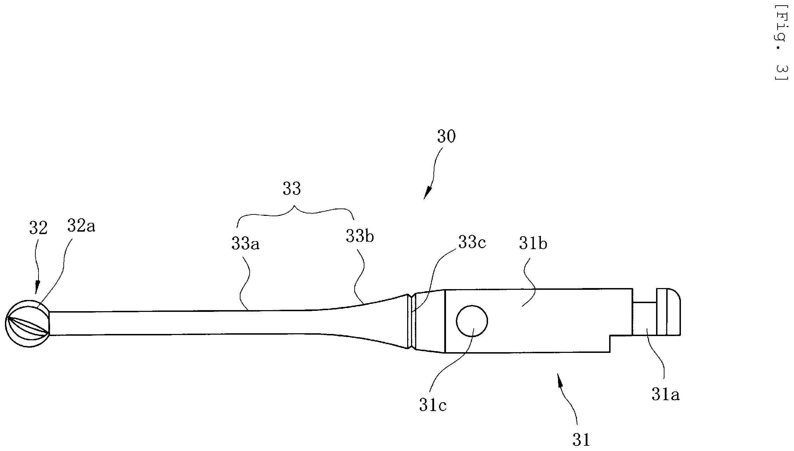

FIG. 3 is a front view of another embodiment of the stainless steel bur according to the present invention. A stainless steel bur 30 of FIG. 3 includes a base side handle 31, a tip working section 32, multiple cutting blades 32a formed in the working section 32, and a tapered intermediate section 33 between the working section 32 and the handle 31. The handle 31 includes an attachment 31a connectable to a hand piece, and a straight part 31b for a rotating apparatus to grip. An intermediate section 33 includes a straight portion 33a on the working section 32 side and a tapered portion 33b on the handle 31 side. In this manner, the intermediate section 33 may have a tapered portion. A short diameter section 33c is formed near a long diameter end of the tapered portion 33b. If the short diameter section 33c is formed near the long diameter end of the tapered portion 33b in this manner, there are merits that the bur becomes difficult to break, and even if the bur does break, the broken bur is easier to remove (than when it breaks on the working section side) since stress converges at the short diameter section 33c provided near the long diameter end of the tapered portion 33b and then it breaks. The short diameter section 33c of the third embodiment is a V-shaped groove. Moreover, in this embodiment, a hole 31c instead of a short diameter section is formed in the handle 31. The hole 31c may or may not pass through the handle 31. Even in the case where a hole is formed in the handle 31, it is possible to bend the bur as is in the case of providing a short diameter section.

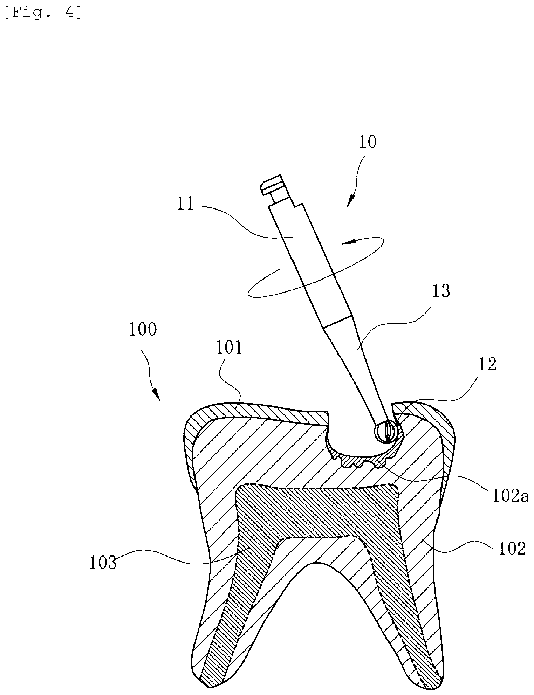

FIG. 4 is a diagram showing a state of cutting dental caries 102a of dentin 102 with the stainless steel bur 10 of FIG. 1. Note that since stainless steel burs 20 and 30 of the embodiments of FIG. 2 and 3 are almost in the same state, description will be made with reference to the example of FIG. 1.

The surface of a portion protruding from the gum of the cavity 100 is covered by enamel 101 and dentin 102 is therebelow. There is dental pulp 103 inside of the dentin 102. Dental caries 102a in FIG. 4 has developed from the enamel 101 portion to the middle of the dentin 102. When treating this cavity 100, first cut the dental caries of the enamel 101 using a dental bur, and cut the dental caries 102a of the dentin 102 from the hole opened in the enamel 101 using the stainless steel bur 10. The stainless steel bur 10 is attached to a hand piece not shown in the drawing and rotated.

Since the intermediate section 13 is not deformed while the working section 12 of the stainless steel bur 10 is cutting the dental caries 102a, the technician cuts without sensing any vibrations.

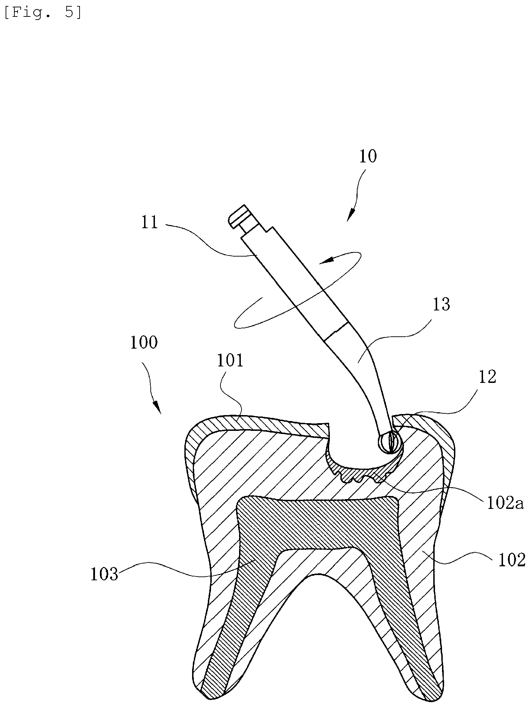

FIG. 5 is a diagram showing a state of the working section 12 of the stainless steel bur 10 cutting healthy dentin 102. If the working section 12 reaches healthy dentin 102, warping occurs at the intermediate section 13 since the healthy dentin 102 is harder than the dental caries 102a, thereby causing vibrations. The technician may sense these vibrations to acknowledge that the healthy dentin 102 is being cut. If the stainless steel bur 10 reaches the health dentin 102, it flexes and vibrates but is still capable of cutting. Therefore, the dental caries 102a within minute depressions of irregularities at the boundary of the healthy dentin and the dental caries may be completely removed by being cut along with the surrounding healthy dentin 102. Note that since warping occurs at the handles 21 and 31 and the intermediate sections 23 and 33 because the short diameter sections 21c and 23a exist in the second embodiment and the short diameter section 33c and the hole 31 exist in the third embodiment, the same results as in the first embodiment are obtained.

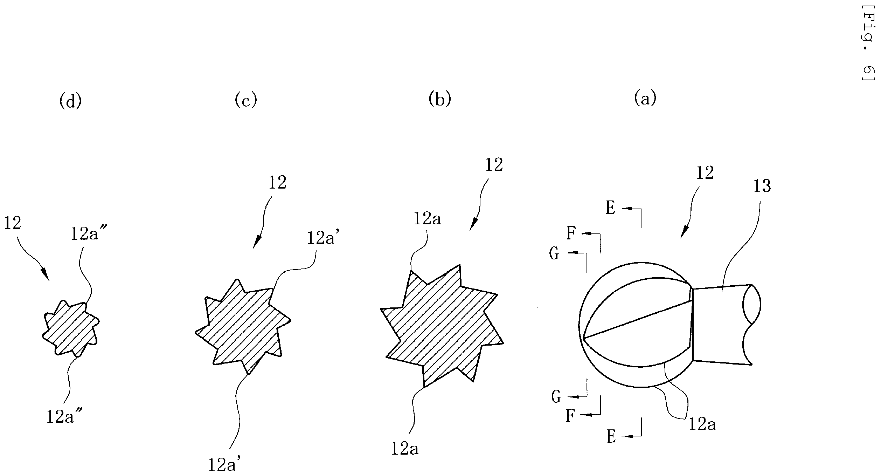

FIG. 6 is an enlarged view of a working section 12 used in a further embodiment of the stainless steel bur according to the present invention, where (a) is a front view, (b) is a cross section cut along the line E-E of (a), (c) is a cross section cut along the line F-F, and (d) is a cross section cut along the line G-G. Note that this working section 12 may be employed in any of the burs of FIG. 1 to 3 and the conventionally-configured stainless steel bur. The embodiment of FIG. 6 will be described next as the stainless steel bur of FIG. 1 provided with the working section 12 of FIG. 6.

The cutting blades 12a are formed by forming a spherical working section 12 at the tip of the tapered intermediate section 13 and making cuts in it using a whetstone. In the state they are formed by the whetstone, the cutting blades 12a are sharply pointed through the entire working section until the cutting blade edges, and have great cutting force at the tip.

Moreover, stainless steel having a fibrous crystal structure is cut virtually along the fibers to form the cutting blades 12a, and thus burrs are easily formed at the cutting blade edges. Therefore, with the present invention, the cutting blade edges are blunted by forming burrs on the cutting blades 12a on the tip side from the widest position. Burrs may be removed by etching, barrel polishing, buffing, and the like. In etching, by soaking the tip of the working section 12 in an etching solution, burrs may be removed at a target location to blunt the cutting blades 12a. The roundness of the cutting blade edges may be adjusted by adjusting the etching processing time. By first soaking up to the widest position of the working section 12 in the etching solution and then gradually pulling it out, the cutting blades 12a of the working section 12 may be blunted the most at the tip, and gradually be sharper as it draws away from the tip, and have a normal bluntness past the longest diameter position.

In barrel polishing, by using a barrel medium (polishing stone) at least twice as large as the diameter of the spherical working section 12, the tip side of the working section 12 is polished but the medium does not enter the boundary portion of the intermediate section 13 of the working section 12. In other words, in the boundary portion, the medium makes contact with the intermediate section 13 and the area where the diameter of the working section 12 is longest, and thus the portion therebetween is not polished. As a result, the boundary portion has normal sharpness.

In buffing, the cutting blades 12a may be blunted by grasping the bur using a jig at a position to be polished until the area where the diameter of the spherical working section 12 is longest, placing it on a polishing machine, and polishing it. In the case of buffing, since the tip of the working section 12 is polished strongest, and polishing becomes weaker as it approaches the longest diameter area, the polished working section 12 is bluntest at the tip, gradually becomes sharper as it draws away from the tip, and it has a normal bluntness past the longest diameter position.

Blunting of the cutting blade edges may be carried out by uniformly blunting the cutting blades 12a from the tip of the working section 12 to, for example, halfway down from the tip. Alternatively, it may be blunter as it approaches the tip of the working section 12, becoming less blunt as it draws away from the tip, and not blunt at all on the intermediate section 13 side from the widest position of the working section. In the latter case, cutting blade edges of cutting blades 12a" are very rounded near the tip shown in (d) of FIG. 6, and cutting blade edges of cutting blades 12a' in (c) are less rounded than (d). The cutting blades 12a past the widest position shown in (b) have blunt cutting blade edges and are not rounded at all.

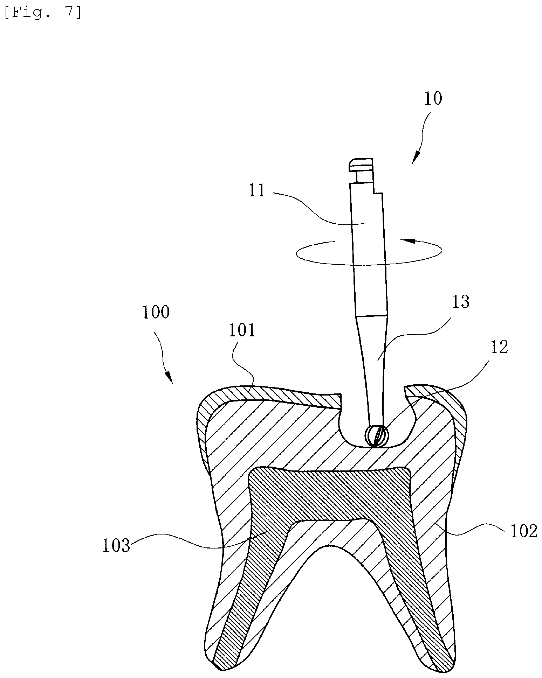

FIG. 7 is a diagram showing a state of cutting healthy dentin 102 with the stainless steel bur 10 according to the embodiment of FIG. 6. If the working section 12 reaches healthy dentin 102, speed of digging down becomes slow with the rounded cutting blades 12a" and 12a' of the working section 12 since the healthy dentin 102, which has a hardness of more than 50 Hv, is harder than the dental caries 102a. However, even if the dental caries 102a has irregularities, it is possible to cut the dentin 102 portion, and thus the dental caries 102a may be completely removed as shown in FIG. 7.

If the dental caries 102a has spread across a larger region than the hole of the enamel 101 as shown in FIG. 4, the hole first opened using the dental bur will be too small. In such case, it is troublesome to change the cutting tool back to the dental bur and cut. Since the cutting blades 12a of the stainless steel bur 10 according to the present invention are not blunt from the widest position of the working section 12 on the intermediate section 13 side, the enamel 101 may also be cut using this portion. Cutting of the enamel 101 in this case may be sufficiently handled since it is on a small scale such as adjusting irregularities and the like. Moreover, since the cutting blades 12a are not blunt, they are not worn out quickly even against the enamel 101, and may be used for a long time.

Next, region of blunting cutting blade edges when the working section is not spherical is described. Normally, even such working section is shaped narrow at the tip, gradually becoming wider to the maximum diameter. Therefore, with the present invention, cutting blade edges from the tip to area of maximum diameter will be rounded. The cutting blade edges in the portion after having reached the maximum diameter are not rounded and kept sharp when either, for example, the same diameter continues or when it is not spherical but gradually becomes narrower.

Since the stainless steel burs 10, 20, and 30 according to the present invention are made of austenitic stainless steel, they do not rust easily. While the steel bur is used repeatedly and is not disposable, once it is used, a sterilization process is carried out through autoclaving or the like before using it again. In the case of an iron steel bur, rust generates and it turns black due to repeated autoclaving. At the same time, those according to the present invention are made of stainless steel, and thus may be used without rusting even if autoclaving is repeated many times.

Moreover, the conventional steel bur and the stainless steel burs 10, 20, and 30 according to the present invention are similar externally regardless that they differ completely in material, and thus may be mistaken for the other. However, in the case of the stainless steel burs 20 and 30 of the second embodiment and the third embodiment, use of a structure provided with the short diameter sections 21c, 23a, and 33c or the hole 31c allows distinct external differences and thereby prevention of mistaking them for each other. In addition, differences in intended purpose and size of the stainless steel burs 20 and 30 may be indicated by changing the number of the short diameter sections 21c, 23a, and 33c and the hole 31c, and coloring them by painting.

Furthermore, with the present invention, since the short diameter sections 21c, 23a, and 33c and/or the hole 31c are formed in the intermediate sections 23 and 33 and/or one-third of the intermediate section side of the handles 21 and 31, respectively, the short diameter sections 21c, 23a, and 33c and the hole 31c are exposed to the outside even when connected to a hand piece, thereby making the short diameter sections 21c, 23a, and 33c and the hole 31c easily visible.

While the case of forming the short diameter section 33c in the intermediate section 33 and the hole 31c in the handle 31 has been described in the embodiment of FIG. 3, the same kind of short diameter section as the short diameter section 21c may be provided in one-third of the intermediate section side of the handle 31, the hole 31c may be provided in both the intermediate section 33 and the handle 31, or one or the other may be provided. In the case of providing a short diameter section and/or a hole in one-third of the intermediate section side of the respective handles 21 and 31, it is preferable to make the diameter of the short diameter section shorter and the hole larger than when providing them in the respective intermediate sections 23 and 33. The reason for providing a short diameter section and/or a hole in the one-third of the intermediate section side is that while it becomes easy to bend when they are near the boundary with the intermediate section and the stainless steel bur is grasped by a hand piece, if they are closer than one-third to the base side, it is difficult to bend even if the diameter is made shorter or the hole is made larger since that portion is hidden within the hand piece.

### BRIEF DESCRIPTION OF DRAWINGS

FIG. 1 is a diagram of an example of a conventional stainless steel bur, where (a) is a front view and (b) is a cross section cut along the line A-A of (a);
FIG. 2 is a diagram of an embodiment of the stainless steel bur according to the present invention, where (a) is a front view and (b) is a cross section cut along the line B-B of (a);
FIG. 3 is a front view of another embodiment of the stainless steel bur according to the present invention;
FIG. 4 is a diagram showing a state of cutting dental caries of a cavity with the stainless steel bur according to the present invention;
FIG. 5 is a diagram showing a state of cutting healthy dentin with the stainless steel bur according to the present invention;
FIG. 6 is an enlarged view of a working section used in a further embodiment of the stainless steel bur according to the present invention, where (a) is a front view, (b) is a cross section cut along the line E-E of (a), (c) is a cross section cut along the line F-F, and (d) is a cross section cut along the line G-G;
FIG. 7 is a diagram showing a state of cutting healthy dentin with the stainless steel bur according to the embodiment of FIG. 6; and
FIG. 8 is a diagram of a conventional steel bur, where (a) is a front view and (b) is a cross section cut along the line H-H of (a).

### [Description of Reference Numerals]

10, 20, 30, 40: stainless steel bur
11, 21, 31, 41: handle
11a, 21a, 31a, 41a: attachment
11b, 21b, 31b, 41b: straight part
31c: hole
12, 22, 32, 42: working section
12a, 22a, 32a, 42a: cutting blade
13, 23, 33, 43: intermediate section
21c, 23a, 33c: short diameter section
100: cavity
101: enamel
102: dentin
102a: dental caries
103: dental pulp

## Claims

1. A stainless steel bur (20, 30) comprising:
a handle (21, 31), which includes an attachment (21a, 31a) connectable to a hand piece and a straight part (21b, 31b) for a rotating apparatus to grip, the handle being removably connectable to the hand piece on the base side;
a working section (22, 32) to which a cutting blade (22a, 32a) for cutting teeth is attached to the tip; and
an intermediate section between the working section (22, 32) and the handle (21, 31), at least part of the intermediate section (23, 33) having a tapered form,
wherein the steel bur (20, 30) is hardened through wire drawing, made of austenitic stainless steel having a fibrous structure, and when the working section (22,32) is rotated and meets healthy dentin and/or enamel, vibrations are generated and/or cutting resistance increases,
**characterized in that** a short diameter section (21c) and/or a hole (31c) is formed in the straight part of the handle (21, 31) within a range of one-third of the length of the handle (21, 31) from the intermediate section (23, 33) side end of the handle (21, 31).

2. The stainless steel bur (20, 30) of claim 1, wherein the shortest diameter between the working section (22, 32) and the handle (21, 31) is smaller than the maximum diameter of the working section (22, 32), and a length between the working section (22, 32) and the handle (21, 31) is at least the maximum diameter of the working section (22, 32).

3. The stainless steel bur (20, 30) of either claim 1 or Claim 2, wherein a further short diameter section (23a, 33c) is formed in the part having the tapered form.

4. The stainless steel bur (20, 30) of any of the claims 1 to 3, wherein the short diameter section (21c, 23a, 33c) comprises a U-shaped groove.

## Patentansprüche

1. Edelstahlbohrer (20, 30), umfassend:
einen Griff (21, 31), der eine Anbringung (21a, 31a) aufweist, die mit einem Handstück und einem geraden Teil (21b, 31b) zum Greifen einer Drehvorrichtung verbindbar ist, wobei der Griff mit dem Handstück auf der Basisseite lösbar verbindbar ist,
einen Arbeitsabschnitt (22, 32), an dem eine Schneidklinge (22a, 32a) zum Schneiden von Zähnen an der Spitze angebracht ist, und
einen Zwischenabschnitt zwischen dem Arbeitsabschnitt (22, 32) und dem Griff (21, 31), wobei mindestens ein Teil des Zwischenabschnitts (23, 33) eine sich verjüngende Form hat,
wobei der Stahlbohrer (20, 30) durch Drahtziehen gehärtet ist, aus austenitischem Edelstahl mit einer faserigen Struktur hergestellt ist und, wenn der Arbeitsabschnitt (22, 32) gedreht wird und auf gesundes Dentin und/oder Emaille trifft, Schwingungen erzeugt werden und/oder ein Schneidwiderstand zunimmt,
**dadurch gekennzeichnet, dass** ein kurzer Durchmesserabschnitt (21c) und/oder ein Loch (31c) in dem geraden Teil des Griffs (21, 31) innerhalb eines Bereichs eines Drittels der Länge des Griffs (21, 31) von dem Seitenende des Zwischenabschnitts (23, 33) des Griffs (21, 31) gebildet ist.

2. Edelstahlbohrer (20, 30) nach Anspruch 1, wobei der kürzeste Durchmesser zwischen dem Arbeitsabschnitt (22, 32) und dem Griff (21, 31) kleiner ist als der maximale Durchmesser des Arbeitsabschnitts (22, 32) und eine Länge zwischen dem Arbeitsabschnitt (22, 32) und dem Griff (21, 31) mindestens den maximalen Durchmesser des Arbeitsabschnitts (22, 32) beträgt.

3. Edelstahlbohrer (20, 30) nach entweder Anspruch 1 oder Anspruch 2, wobei ein weiterer kurzer Durchmesserabschnitt (23a, 33c) in dem Teil mit der sich verjüngenden Form gebildet ist.

4. Edelstahlbohrer (20, 30) nach einem der Ansprüche 1 bis 3, wobei der kurze Durchmesserabschnitt (21c, 23a, 33c) eine U-förmige Nut umfasst.

## Revendications

1. Fraise en acier inoxydable (20, 30) comprenant :
un manche (21, 31), qui comprend un accessoire (21a, 31a) pouvant être relié à une pièce à main et une partie droite (21b, 31b) pour un appareil rotatif à saisir, le manche pouvant être relié de manière amovible à la pièce à main sur le côté de base ;
une section de travail (22, 32) à laquelle une lame de coupe (22a, 32a) destinée à découper des dents est fixée à la pointe ; et
une section intermédiaire entre la section de travail (22, 32) et le manche (21, 31), au moins une partie de la section intermédiaire (23, 33) ayant une forme conique,
dans laquelle la fraise en acier (20, 30) est durcie par tréfilage, est constituée d'acier inoxydable austénitique à structure fibreuse, et lorsque la section de travail (22, 32) tourne et rencontre une dentine et/ou un émail sains, des vibrations sont générées et/ou la résistance à la coupe augmente,
**caractérisée en ce qu'**une section de petit diamètre (21c) et/ou un trou (31c) est formé dans la partie droite du manche (21, 31) dans une plage d'un tiers de la longueur du manche (21, 31) à partir de l'extrémité côté section intermédiaire (23, 33) du manche (21, 31).

2. Fraise en acier inoxydable (20, 30) selon la revendication 1, dans laquelle le diamètre le plus petit entre la section de travail (22, 32) et le manche (21, 31) est inférieur au diamètre maximum de la section de travail (22, 32), et une longueur entre la section de travail (22, 32) et le manche (21, 31) est au moins le diamètre maximum de la section de travail (22, 32).

3. Fraise en acier inoxydable (20, 30) selon la revendication 1 ou 2, dans laquelle une autre section de petit diamètre (23a, 33c) est formée dans la partie ayant la forme conique.

4. Fraise en acier inoxydable (20, 30) selon l'une quelconque des revendications 1 à 3, dans laquelle la section de petit diamètre (21c, 23a, 33c) comprend une rainure en forme de U.
